Europäisches Patentamt

European Patent Office

Office européen des brevets

(11) Veröffentlichungsnummer: **0 292 748**
**A2**

## EUROPÄISCHE PATENTANMELDUNG

(21) Anmeldenummer: 88107176.5

(22) Anmeldetag: 04.05.88

(51) Int. Cl.⁴ **G06F 11/26**

(30) Priorität: 27.05.87 DE 3717853

(43) Veröffentlichungstag der Anmeldung:
30.11.88 Patentblatt 88/48

(84) Benannte Vertragsstaaten:
AT BE CH DE ES FR GB IT LI NL SE

(71) Anmelder: **Siemens Aktiengesellschaft Berlin
und München**
**Wittelsbacherplatz 2**
**D-8000 München 2(DE)**

(72) Erfinder: **Beck, Hans-Joachim, Dipl.-Ing. (FH)**
**Ebertstrasse 43**
**D-7500 Karlsruhe(DE)**
Erfinder: **Eger, Ulrich, Dipl.-Ing. (FH)**
**Rudolf-Diesel-Strasse 10**
**D-7515 Linkenheim(DE)**
Erfinder: **Hahn, Josef, Dipl.-Ing. (FH)**
**Juststrasse 27**
**D-6744 Kandel(DE)**
Erfinder: **Käppeler, Alfred, Dipl.-Ing. (FH)**
**Gerwigstrasse 30**
**D-7500 Karlsruhe(DE)**

(54) Prüfsystem für mit Mikroprozessoren bestückte elektronische Baugruppen.

(57) Die Erfindung bezieht sich auf ein Prüfsystem für mit Mikroprozessoren bestückte elektronische Baugruppen mit einem Zentralrechner, einer Prüflingsadaptiervorrichtung und einem Prüfbaustein, der mindestens einen Mikroprozessor enthält, welcher identische Funktionen wie der auf zu prüfenden Baugruppen vorhandene Mikroprozessor ausführen kann. Um mit geringem Aufwand Fehlfunktionen auf dem Prüfling aufgrund fehlerhafter Steuersignale zu vermeiden, weist das Prüfsystem einen Master-Prozessor (MμP) und einen Test-Prozessor (TμP) auf, der die für den Mikroprozessor auf der zu prüfenden Baugruppe spezifische Funktion ausführt, wobei die Testroutinen vom Master-Prozessor (MμP) vorgegeben werden und die Umsetzung in die prozessorspezifischen Funktionen über einen Befehlsübergabespeicher (BSP) im Test-Prozessor (TμP) erfolgt.

Die Erfindung wird angewandt bei Baugruppentestern.

FIG 1

EP 0 292 748 A2

## Prüfsystem für mit Mikroprozessoren bestückte elektronische Baugruppen

Die Erfindung bezieht sich auf ein Prüfsystem für mit Mikroprozessoren bestückte elektronische Baugruppen, das mit den Merkmalen des Oberbegriffs des Anspruchs 1 ausgebildet ist.

Ein bekanntes Prüfsystem dieser Art (Siemens-Druckschrift "SITEST 110 für die dynamische Funktionsprüfung hybrider und mikroprozessorbestückter Baugruppen", August 1984) ist hinsichtlich des Aufbaus des Zentralrechners und der anschließbaren Peripherie so ausgebildet, daß auch mikroprozessorbestückte Baugruppen als Prüfling getestet werden können. Für jeden Prozessortyp wird hier ein passender Prüfbaustein benutzt, der Schreib- bzw. Lesezugriffe auf der Prozessorschnittstelle der zu prüfenden Baugruppe ausführen kann. Das Zeitverhalten dieser Schreib- und Lesezugriffe muß hierbei möglichst genau dem des Prozessors auf der zu prüfenden Baugruppe entsprechen.

Beim bekannten System befindet sich der Prüfprozessor in einem separaten Prüfbaustein. Der Prüfprozessor hatte die Aufgabe, den Datenverkehr mit dem Rechner durchzuführen, den Ablauf des Testschrittes zu steuern und die Buszyklen, d. h. die Schreib- bzw. Lesezyklen, zu generieren. Zu diesem Zweck wird der Prüfprozessor elektrisch mit den Anschlüssen des Prozessors auf der Baugruppe verbunden, wobei dieser entweder entfernt wird oder parallel geschaltet bleibt. Ein Zugriff zum Prozessor auf der Prüflingsbaugruppe erfolgt beim bekannten System in der Weise, daß der Prüfbaustein vom übergeordneten Zentralrechner den Auftrag, einen Schreib- bzw. Lesezugriff auf dem Prüfling durchzuführen, erhält und sodann das Prüfgerät einen festen Adreßbereich, wobei dieser Vorrang vor Prüflingsadressen hat, belegt. Mit einem Adreßkomparator wird am Anfang eines jeden Buszyklus entschie den, ob ein interner oder ein Prüflingszugriff vorliegt. Bei einem Prüflingszugriff wird die Schnittstelle für die Zeitdauer dieses Buszyklus zum Prüfling freigeschaltet, und bei internen Zugriffen bleibt die Schnittstelle gesperrt.

Nachteilig ist hierbei, daß die Schnittstelle vom Prüfprozessor zum Prozessor auf dem Prüfling erst freigeschaltet wird, wenn an den Adreßausgängen des Prüfprozessors eine Adresse ansteht, die nicht vom Prüfbaustein belegt wird. Dadurch werden Steuersignale, die schon vor der Adresse anstehen (z. B. das Signal "Adresse lesen" beim Prozessor 8086 der Fa. Intel), beschnitten und nicht in voller Breite zum Prüfling durchgeschaltet. Das kann zu Fehlfunktionen auf dem Prüfling führen. Treten während der Prüfung Störimpulse auf dem Takt- oder auf dem Rücksetzsignal auf, ist das Prüfgerät vom übergeordneten Zentralrechner weder steuerbar noch ansprechbar. Der Prüfvorgang muß somit anschließend durch manuelles Rücksetzen abgebrochen werden.

Der Erfindung liegt die Aufgabe zugrunde, ein Prüfsystem der genannten Art so weiterzubilden, daß mit geringem Aufwand Fehlfunktionen auf dem Prüfling aufgrund fehlerhafter Steuersignale vermieden werden.

Zur Lösung dieser Aufgabe weist ein Prüfsystem der eingangs genannten Art die Merkmale des Kennzeichens des Anspruchs 1 auf.

Mit dem erfindungsgemäßen Prüfsystem ist in vorteilhafter Weise erreicht, daß bei geringem Entwicklungsaufwand der Prüfbaustein mit dem Prüfprozessor in einen für alle Prüfbausteine gleichen Standardteil und in einen busspezifischen Teil aufgeteilt ist.

Die Aufgaben des Prüfprozessors werden somit von zwei Prozessoren, nämlich einem Master-Prozessor und einem Test-Prozessor ausgeführt. Dadurch kann zur Vermeidung der oben aufgeführten Nachteile der Master-Prozessor den Datenverkehr mit dem Zentralrechner sowie eine Überwachung des Test-Prozessors vornehmen.

Weiterhin kann der Master-Prozessor den Test-Prozessor mit Daten versorgen und das Starten und Überwachen des Testablaufs durchführen.

Die Erfindung wird anhand der Figuren erläutert, wobei

Figur 1 eine Zusammenstellung der grundlegenden Elemente eines Prüfbausteins des Prüfsystems und

Figur 2 ein Blockschaltbild eines Prüfbausteins mit den notwendigen Busverbindungen zeigt.

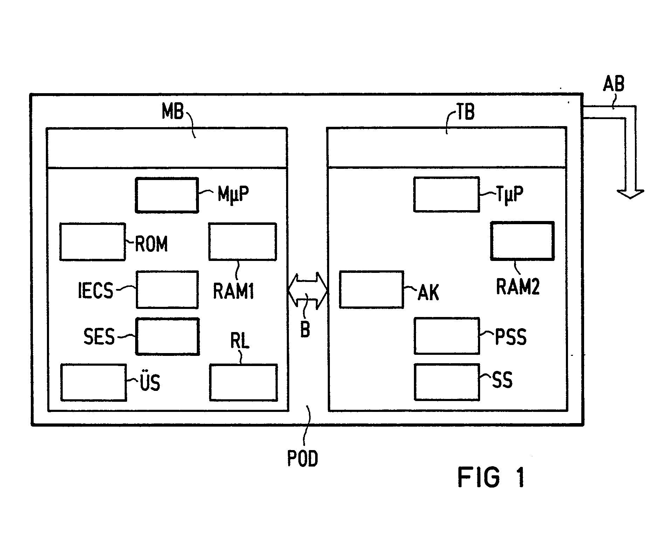

Bei dem in der Figur 1 dargestellten Prüfbaustein POD soll das linke Feld eine Flachbaugruppe MB mit einem Master-Prozessor MμP (z. B. 80186 der Fa. Intel) symbolisieren, die den erwähnten Master-Prozessor MμP und einen zugeordneten Schreib-/Lesespeicher RAM1 aufweist. Weiterhin ist ein Lesespeicher ROM für die notwendige Firmware vorhanden, und es ist auf dieser Flachbaugruppe MB eine Schnittstelle IECS, beispielsweise nach IEC-Norm, und eine serielle Schnittstelle SES vorhanden. Weiterhin ist noch eine Überwachungsschaltung ÜS und eine Rücksetzlogik RL angeordnet. Über eine Busverbindung B ist die Flachbaugruppe MB mit einer Testbaugruppe TB verbunden, die einen Test-Prozessor TμP und einen zugeordneten Schreib-/Lesespeicher RAM2 aufweist. Weiterhin sind auf der Testbaugruppe TB noch ein Adreßkomparator AK, eine Prüflingsschnittstelle PSS und eine Schutzschaltung SS vorhanden. Über einen entsprechenden Adapterbus AB kann der Prüfbaustein POD mit den zu prüfenden Mikroprozessoren verbunden werden.

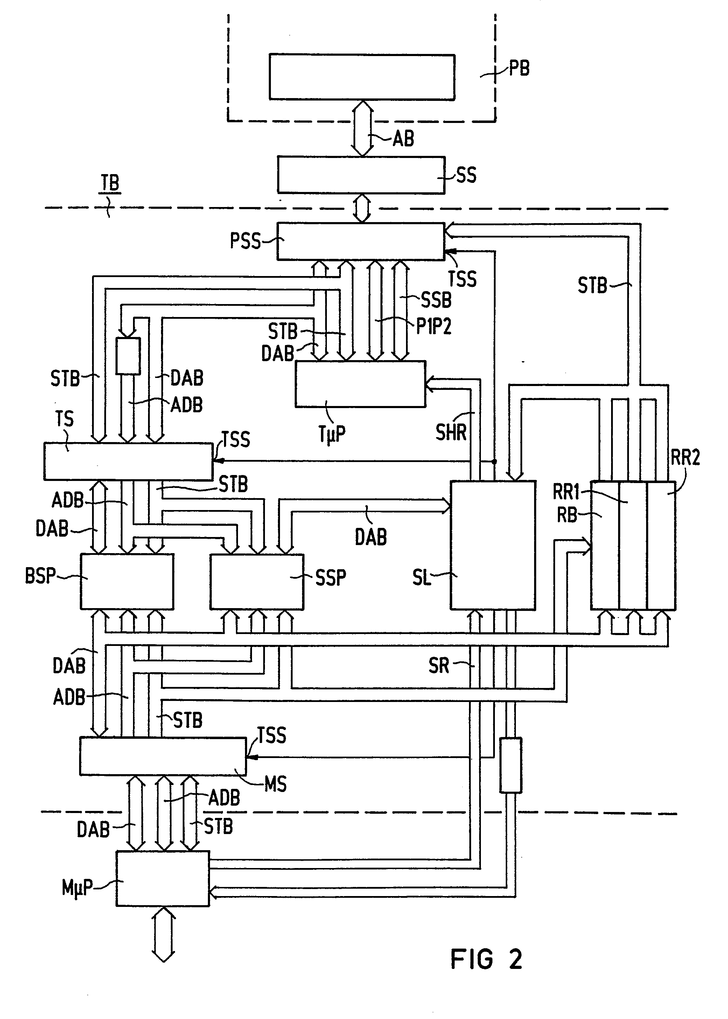

In der Figur 2 ist ein Blockschaltbild angegeben, das im besonderen ein Ausführungsbeispiel für die Testbaugruppe TB darstellt, die über entsprechende Busverbindungen Datenbus DAB, Adreßbus ADB und Steuerbus STB mit dem Master-Prozessor MμP und über einen entsprechenden Adapterbus AB mit einer hier nicht näher dargestellten Prüflingsbaugruppe PB verbindbar ist. Der Test-Prozessor TμP ist über einen Daten- und Steuerbus DAB, STB sowie über weitere Busverbindungen für Sondersignale SSB und Anschlüsse P1P2 mit der Prüflingsschnittstelle PSS verbunden, die wiederum über die Schutzschaltung SS mit dem Adapterbus AB verbunden ist. Weiterhin sind Busverbindungen mit einem entsprechenden Daten-, Adreß- und Steuerbus DAB, ADB, STB über eine Test-Schnittstelle TS und einen Befehlsübergabespeicher BSP sowie eine Master-Schnittstelle MS zum Master-Prozessor MμP auf der anderen, hier nicht näher dargestellten Baugruppe MB vorhanden. Weiterhin ist ein Steuerspeicher SSP vorhanden, über den die Signale der oben beschriebenen Adreß- und Steuerbusleitungen ADB, STB geführt werden. Vom Steuerspeicher SSP ist ein Datenbus DAB zu einer Steuerlogik SL geführt, die ein Start-/Halte-/Rücksetzsignal SHR für den Test-Prozessor TμP und ein Statussignal für den Master-Prozessor MμP bereitstellt, wobei der Master-Prozessor MμP wiederum ein Start-/Rücksetzsignal SR für die Steuerlogik SL abgeben kann. Die Steuerlogik SL ist weiterhin zur Bereitstellung von Tristate-Signalen TSS noch mit der Prüflingsschnittstelle PSS, der Test-Schnittstelle TS und der Master-Schnittstelle MS verbunden. Der Datenbus zwischen dem Befehlsübergabespeicher BSP und der Master-Schnittstelle MS ist noch auf eine Registeranordnung, die aus einem Betriebsartenregister RB, einem Richtungsregister RR1 und einem weiteren Richtungsregister RR2 besteht, geführt. Die Registeranordnung ist weiterhin über einen Steuerbus STB mit dem Steuerbus STB am Eingang der Master-Prozessorschnittstelle verbunden. Die Ausgänge der Registeranordnung sind zum einen auf die Steuerlogik SL und auf die Prüflingsschnittstelle PSS über einen Steuerbus STB geführt.

Die Funktion des erfindungsgemäßen Prüfsystems wird anhand der Figuren beschrieben.

Die Aufgabe des Test-Prozessors TμP, der mit dem auf der Prüflingsbaugruppe PB identisch ist, ist es, Schreib- bzw. Lesezugriffe auf dem Prüfling PB durchzuführen. Da der Test-Prozessor TμP keinen eigenen unabhängigen Befehlsspeicher hat, dient als Befehlsspeicher der Befehlsübergabespeicher BSP in Form eines Schreib-/Lesespeichers RAM2 (vgl. Figur 1). Der Befehlsübergabespeicher BSP bildet somit auch eine Datenschnittstelle zwischen dem Master- (MμP) und Test-Prozessor (TμP). Er wird dazu vom Master-Prozessor MμP mit dem Operationscode des Test-Prozessors TμP geladen. In den Befehlsübergabespeicher BSP kann ein einzelner Befehl, eine Befehlsfolge oder ein ganzes Programm geladen werden, wobei der Test-Prozessor TμP nach seiner Freigabe die Befehle ausführt, welche im Befehlsübergabespeicher BSP stehen. Parallel zum Befehlsübergabespeicher BSP befindet sich der Steuerspeicher SSP. Er wird ebenfalls vom Master-Prozessor MμP geladen und liefert die Daten für die Steuerlogik SL, die sowohl die Schnittstelle PSS zum Prüfling (Adreß-, Daten- und Steuerbus) wie auch die Schnittstelle TS (Adreß-, Daten- und Steuerbus) zum Befehlsübergabespeicher BSP steuert. Durch entsprechende Steuerbits kann der Test-Prozessor TμP in den Halte- oder Rücksetzzustand versetzt werden.

Im folgenden Abschnitt wird der Funktionsablauf eines Schreib-/Lesezyklus beschrieben.

Im Grundzustand sind die Bustreiber der Master-Baugruppe MB zum Befehlsübergabe- (BSP) und Steuerspeicher (SSP) freigegeben, und die Bustreiber des Test-Prozessors TμP sind gesperrt. Der Master-Prozessor MμP schreibt Daten in den Befehlsübergabespeicher BSP, die der Test-Prozessor TμP als Operationscode abarbeiten soll.

Ist nun ein Schreibzyklus auf dem Prüfling PB auszuführen, so müssen zur Vorbereitung folgende Daten in den Befehlsübergabespeicher BSP geladen werden:
- Befehl, um auszugebendes Datum in ein Register des Test-Prozessors TμP zu laden,
- Laden der Adressen, auf die geschrieben werden soll, in ein Register des Test-Prozessors TμP,
- Laden des Operationscodes für den eigentlichen Schreibbefehl und
- Laden des Operationscodes für einen Sprung in die Wartestellung.

Als letzten Befehl erhält der Test-Prozessor TμP immer einen Sprungbefehl auf die Adresse (Wartestellung), auf die er nach dem nächsten Start zugreifen soll.

Soll ein Lesezyklus ausgeführt werden, müssen vorab folgende Befehle in den Befehlsübergabespeicher geladen werden:
- Laden der Adresse,
- Laden des Operationscodes für einen Lesebefehl und
- Schreiben der gelesenen Daten in den Befehlsübergabespeicher sowie
- Laden des Operationscodes für einen Sprung in Wartestellung.

Anschließend wird der Steuerspeicher SSP mit den entsprechenden Bits geladen. Für den Test-Prozessor TμP liegen der Befehlsübergabespeicher BSP und der Steuerspeicher SSP auf den gleichen Adressen.

Mit der aufsteigenden Flanke eines Lesesignals wird aus dem Steuerspeicher SSP die Steuerinformation für den darauffolgenden Buszyklus entnommen. Die Steuerlogik SL wertet die Information aus und erzeugt die entsprechenden Steuersignale nach Ende des Lesezugriffs oder zu Beginn des nächsten Zyklus. Bei Steuersignalen, die rechtzeitig vor einem Zyklus gesetzt oder rückgesetzt werden sollen, muß das entsprechende Steuerbit vor dem tatsächlichen Aktivieren gesetzt sein. Auf diese Weise kann man das Steuerbit mit anderen Signalen oder dem Takt des Test-Prozessors T$\mu$P synchronisieren.

**Ansprüche**

1. Prüfsystem für mit Mikroprozessoren bestückte elektronische Baugruppen
- mit einem Zentralrechner,
- einer Prüflingsadaptiervorrichtung und
- einem Prüfbaustein, der mindestens einen Mikroprozessor enthält, welcher identische Funktionen wie der auf zu prüfenden Baugruppen vorhandene Mikroprozessor ausführen kann,.
**dadurch gekennzeichnet,**
- daß das Prüfsystem einen Master-Prozessor (M$\mu$P), der für eine Vielzahl von Mikroprozessoren auf der zu prüfenden Baugruppe benutzbar ist, und einen Test-Prozessor (T$\mu$P) als Bestandteil des Prüfbausteins enthält, der die für den Mikroprozessor auf der zu prüfenden Baugruppe spezifische Funktion ausführt, wobei
- die Testroutinen vom Master-Prozessor (M$\mu$P) vorgegeben werden und die Umsetzung in die prozessorspezifischen Funktionen über einen Befehlsübergabespeicher (BSP) im Test-Prozessor (T$\mu$P) erfolgt.
2. Prüfsystem nach Anspruch 1, **dadurch gekenn-zeichnet,**
- daß der Test-Prozessor (T$\mu$P) auf einer separaten Testbaugruppe (TB) angeordnet ist, die austauschbar ist zur Anpassung an den jeweils auf der zu prüfenden Baugruppe (PB) befindlichen Mikroprozessor.

87 P 4433

FIG 1

87 P 4433

FIG 2